# FASCICULE DE BREVET EUROPEEN

(11) **EP 0 788 858 B1**
(45) Date de publication et mention de la délivrance du brevet: **04.09.2002**
(21) Numéro de dépôt: 97100699.4
(22) Date de dépôt: 17.01.1997
(51) Int. Cl.: B23D 57/00, B28D 5/04

(54) **Dispositif de sciage par fil**
Drahtsägevorrichtung
Wire sawing device

(30) Priorité: 06.02.1996 CH 30296
(43) Date de publication de la demande: 13.08.1997
(73) Titulaire: HCT Shaping Systems SA, 1033 Cheseaux (CH)
(72) Inventeur: Hauser, Charles, 1261 Genolier (CH)
(74) Mandataire: Micheli & Cie

(56) Documents cités:
- EP-A- 0 689 891
- CH-A- 590 101
- US-A- 4 134 384
- PATENT ABSTRACTS OF JAPAN vol. 4, no. 132 (M-32) [614] , 17 Septembre 1980 & JP 55 090254 A (CITIZEN TOKEI K.K.), 8 Juillet 1980,
- PATENT ABSTRACTS OF JAPAN vol. 17, no. 664 (M-1523), 8 Décembre 1993 & JP 05 220732 A (SUMITOMO METAL IND LTD), 31 Août 1993,
- PATENT ABSTRACTS OF JAPAN vol. 17, no. 537 (M-1487), 28 Septembre 1993 & JP 05 146968 A (SHIN ETSU HANDOTAI CO LTD ET AL), 15 Juin 1993,

## Description

La présente invention concerne un dispositif de sciage par fil comprenant un bâti, une nappe de fils susceptible de se déplacer selon un mouvement alternatif ou continu en appui contre une pièce à scier et supportée par des cylindres guide-fils comportant une partie centrale fixe montée rigidement sur le bâti et supportant un manteau rotatif qui est monté tournant sur la partie centrale fixe grâce à des organes de paliers agencés entre la partie centrale fixe et le manteau rotatif.

On connaît des dispositifs de sciage comprenant une nappe de fils susceptible de se déplacer selon un mouvement continu ou alternatif en appui contre une pièce à scier définissant ainsi une zone de sciage. La zone de sciage est constituée d'un ensemble de cylindres placés parallèlement. Ces cylindres, appelés guide-fils, sont gravés avec des gorges définissant l'intervalle entre les fils de la nappe, soit l'épaisseur des tranches sciées.

Les cylindres guide-fils sont habituellement constitués d'une partie monobloc creuse ou pleine revêtue par un élément synthétique dans lequel sont gravés les gorges maintenant l'espacement des fils de la nappe et fixée au moins à l'une de ses extrémité par un ou des paliers contenant les roulements comme cela est décrit dans le document US 4.134.384. Le cylindre guide-fils est démontable pour pouvoir le reconditionner après usure de son revêtement. Dépendant de la taille du cylindre guide-fils celui-ci peut être monté en porte-à-faux ou maintenu aux deux extrémités. Les efforts induits par la tension de la nappe de fils seront directement transmis aux paliers ce qui entraînera un échauffement inhomogène et non souhaitable de la partie centrale en raison de la génération de chaleur en provenance des extrémités. Un système de contrôle de température est généralement prévu, par exemple du type décrit dans le document EP 0.689.891 A1.

Les paliers d'extrémités doivent être parfaitement alignés si l'on désire éviter une importante usure ou un échauffement intempestif dû à une construction hyperstatique provoquant des efforts élastiques incontrôlés. Toutefois, en raison de la complexité et de la taille du système environnant, un strict contrôle de l'alignement des paliers est difficile à réaliser et leur usinage délicat est coûteux.

Des dispositifs de sciage par fil équipés de cylindres guide-fils du type précité sont déjà connus, spécialement dans l'industrie des composants électroniques, des ferrites, des quartz et silices, pour l'obtention en tranches fines de matériaux tels que le silicium poly ou monocristallin ou les nouveaux matériaux tels que GAs, InP, GGG (grenat gadolinium-gallium) ou également quartz, saphir synthétique, voire céramique. Le prix élevé de ces matériaux rend le sciage par fil plus attractif comparativement à d'autres techniques comme le sciage par disque diamanté.

La précision des pièces sciées, très importante pour des applications électroniques, dépend de la position des fils au cours du sciage et des éléments de support de la pièce à scier, donc de la position des cylindres guide-fils par rapport à la pièce à scier. Cette position sera fonction de la température des cylindres guide-fils donc de la charge et de la précision de l'usinage des paliers supports des boîtes à roulements.

Les exigences des applications en électronique, par exemple liées aux dimensions grandissantes des lingots, rendent de plus en plus difficile la maîtrise de la fixation des cylindres guide-fils et de leur démontage rapide pour reconditionnement. De plus, la fréquence de reconditionnement augmente en raison des précisions demandées. Les roulements supportant les guide-fils fortement chargés génèrent de la chaleur qui est d'autant plus grande si la précision d'alignement des paliers est mauvaise en raison de la difficulté de l'usinage de ceux-ci. Cette énergie additionnée à celle produite au cours du sciage et diffusée dans les parties avoisinantes et notamment dans le cylindre guide-fils, contribue à l'imprécision de la découpe. On peut minimiser cet effet, en utilisant pour la fabrication des éléments importants des cylindres guide-fils, des matériaux à très bas coefficient de dilatation, comme cela est décrit dans le document JP 0 5220732.

Le document JP 55090254, représentant l'état de la technique le plus proche, décrit un cylindre guide-fils pour machines de sciage par fil qui comporte un arbre central fixe monté d'un côté sur le bâti de machine et présentant de l'autre côté une extrémité libre. Un manteau rotatif est monté sur cet arbre grâce à des roulements. Etant donné que cet arbre n'est maintenu que d'un côté, les forces de traction élevées exercées par les fils de la nappe de fil peuvent déformer et incliner les cylindres guide-fils, ce qui influence significativement la qualité géométrique des tranches sciées.

Le but de l'invention consiste à remédier aux inconvénients précités, et elle est caractérisée à cet effet par les caractéristiques figurant à la revendication indépendante 1.

Ces dernières permettent au dispositif de sciage une très grande précision et une meilleure répartition des charges sur les cylindres guide-fils.

La partie centrale fixe maintenue des deux côtés sur le bâti améliore la précision d'alignement qui devient très grande. Cet arrangement avec la partie centrale fixe maintenue des deux côtés et le manteau rotatif permet l'utilisation de guide-fils de grand diamètre avec des roulements plus petits que dans le cas de paliers d'extrémités en raison d'une meilleure distribution des charges, donc une diminution et une meilleure homogénéité de la température.

Ces caractéristiques permettent également une précision d'alignement encore améliorée puisque la partie centrale est fixée des deux côtés et les extrémités sont tenues dans des logements qui ne nécessitent pas des précisions particulières. La construction est simplifiée. Le démontage et la maintenance sont facilités et la précision des pièces sciées est nettement améliorée.

Le manteau peut être revêtu d'un matériau synthétique, par exemple du polyuréthane, dans lequel les gorges servant au guidage du fil sont gravées. Il peut être évidé pour allègement ou pour contenir un circuit de refroidissement.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et des variantes.

La figure 1 est une vue en perspective d'un mode d'exécution du dispositif de sciage par fil.

La figure 2 est une vue en perspective avec coupe partielle d'un cylindre guide-fils.

La figure 3 est une vue en coupe axiale de ce cylindre guide-fils.

La figure 4 est une vue en coupe axiale d'une variante de cylindre guide-fils.

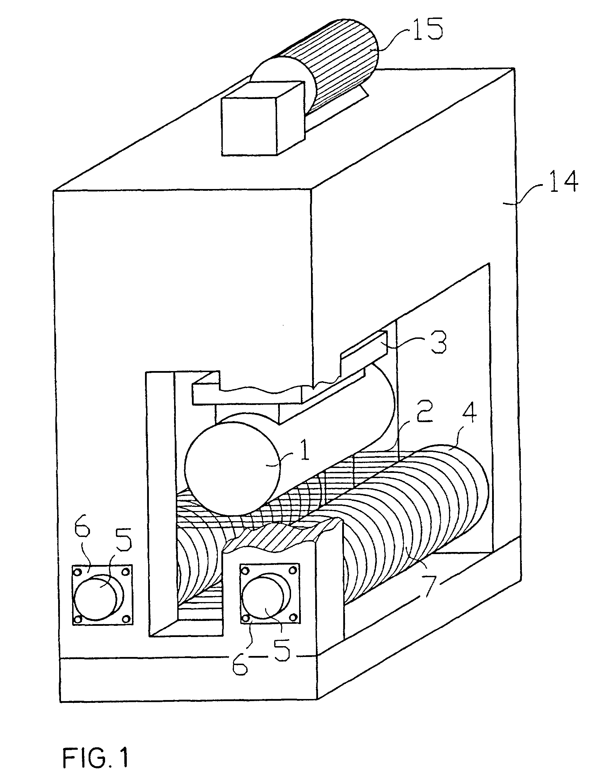

Le dispositif de sciage par fil de la figure 1 illustre en perspective le principe de la présente invention. La pièce à scier 1 est mise en appui contre la nappe de fils 2 par la table-support 3. Les cylindres guide-fils 4 sont réalisés avec un axe fixe 5 dans un palier 6 et un manteau rotatif 7. La table support de lingot est mue par un moteur d'avance 15. Le tout est intégré dans un bâti 14. Les fils de la nappe 2 sont susceptibles d'être entraînés par des moyens connus de façon à être déplacés selon un mouvement alternatif ou continu.

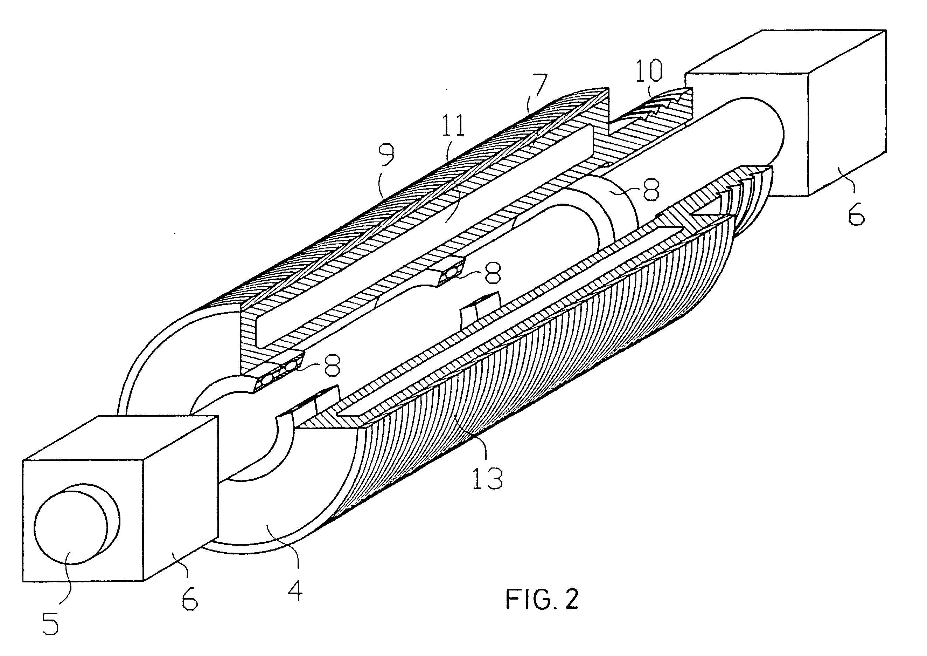

La figure 2 illustre en perspective un cylindre guide-fils 4 ayant un axe ou arbre fixe 5 tenu à chaque extrémité par un palier fixe 6 et traversant de part en part le manteau rotatif 7. Ce dernier est monté sur des roulements 8 et muni d'un revêtement de protection en polyuréthane 9. La rotation est assurée par une poulie d'entraînement 10 située à une extrémité et faisant partie intégrante, dans cet exemple, du manteau rotatif 7. Le manteau rotatif 7 est pourvu de chambres d'allégement 11 permettant éventuellement une circulation de fluide de refroidissement pour le contrôle de sa température. Le revêtement 9 est gravé avec des gorges 13. Le manteau rotatif 7 est avantageusement réalisé dans un matériau à faible coefficient de dilatation, par exemple en alliage Fe-Ni.

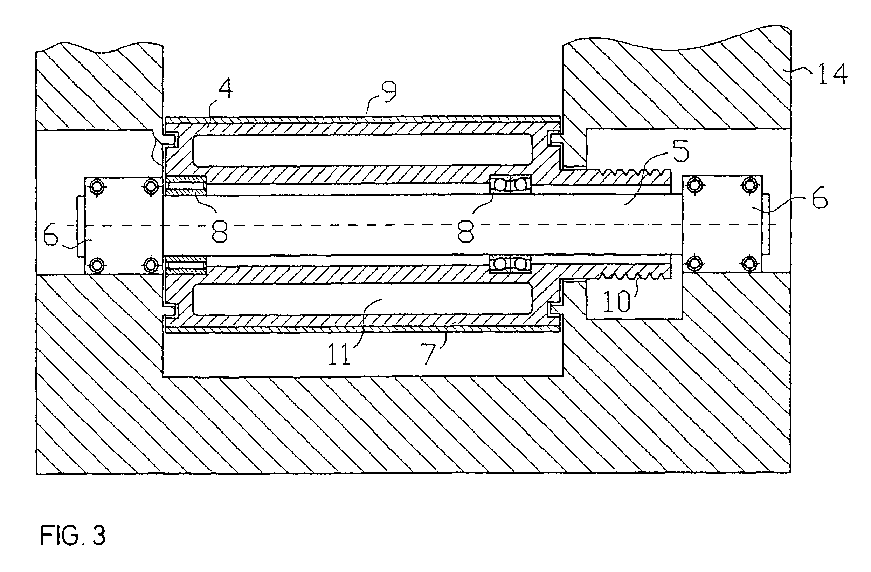

La figure 3 représente une coupe schématique à travers le cylindre guide-fils 4 ayant un axe fixe 5 maintenu par deux paliers fixes 6 contre le bâti 14 du dispositif de sciage. Le manteau rotatif 7 muni d'une cavité d'allégement 11 est revêtu par une couche de poyluréthane 9. L'entraînement du manteau rotatif 7 se fait par la poulie 10 située à une extrémité du manteau rotatif 7. Le manteau rotatif 7 est supporté par des organes de paliers 8, qui pourraient être des roulements à billes, à rouleaux, à aiguilles, ou des paliers de toute autre nature.

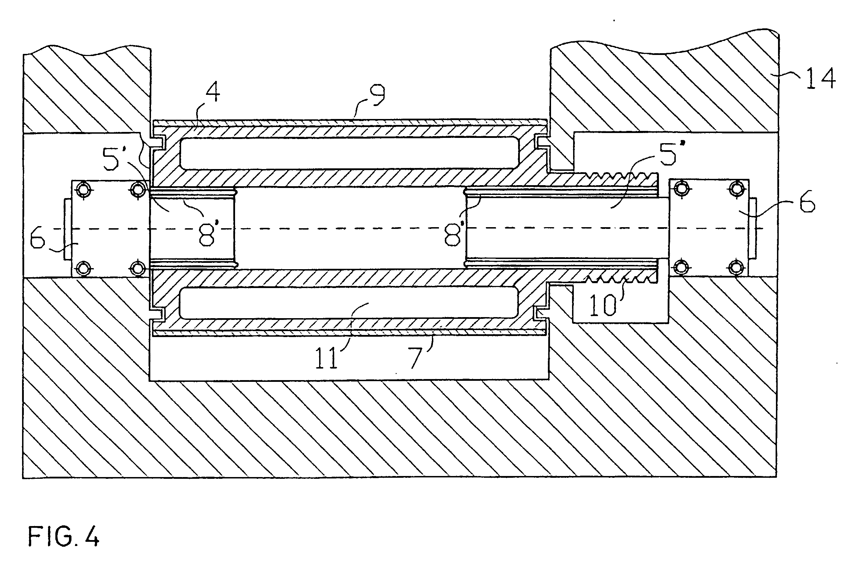

Le cylindre guide-fils 4 illustré à la figure 4 est similaire à celui de la figure 3, mais l'arbre central traversant a été remplacé par deux arbres partiels latéraux 5' fixés rigidement au bâti 14 et supportant le manteau rotatif 7 de chaque côté par l'intermédiaire d'organes de paliers qui sont ici constitués par des paliers à film hydraulique ou pneumatique.

De façon générale, le fil de sciage formant la nappe de fils 2 entre les cylindres guide-fils 4 est constitué d'acier à ressort d'un diamètre compris entre 0.1 et 0.2mm afin de scier des blocs de matériaux durs ou de compositions plus particulières, tels que silicium, céramique, composés des éléments des groupes III-V, GGG (grenats, gadolinium-gallium), saphir, etc., en tranches de 0.1 à 5 mm d'épaisseur environ. L'agent abrasif est un produit du commerce et peut être du diamant, du carbure de silicium, de l'alumine, etc., sous forme fixée au fil ou sous forme libre en barbotine.

Le dispositif de sciage permet par l'utilisation de cylindres guide-fils 4 avec axe fixe 5 de mieux répartir les charges distribuées sur le manteau rotatif 7, de diminuer ainsi les sources de chaleur et de simplifier sa construction, donc d'améliorer la précision de pièces sciées. De plus, le démontage pour maintenance se trouve simplifié.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. Ainsi, d'autres types de construction peuvent être envisagés qui par leur nature conservent la partie centrale fixe 5 et le manteau rotatif 7.

## Revendications

1. Dispositif de sciage par fil comprenant un bâti (14), une nappe de fils (2) susceptible de se déplacer selon un mouvement alternatif ou continu en appui contre une pièce à scier (1) et supportée par des cylindres guide-fils (4), comportant une partie centrale fixe (5) montée rigidement sur le bâti (14) et supportant un manteau rotatif (7) qui est monté tournant sur la partie centrale fixe (5) grâce à des organes de paliers (8, 8') agencés entre la partie centrale fixe (5) et le manteau rotatif (7), **caractérisé par le fait que** la partie centrale fixe est constituée par un arbre central (5) traversant de part en part le manteau rotatif (7) et maintenu des deux côtés rigidement au bâti (14).

2. Dispositif selon la revendication 1, **caractérisé par le fait que** ledit arbre central (5) est réalisé en deux arbres partiels (5') fixés rigidement au bâti (14) et supportant le manteau rotatif (7) de chaque côté.

3. Dispositif selon la revendication 1 ou 2, **caractérisé par le fait que** les organes de palier (8) sont constitués par des roulements à billes, à rouleaux, à aiguilles et/ou des paliers à film hydraulique ou pneumatique.

4. Dispositif selon l'une des revendications 1 à 3, **caractérisé par le fait que** le manteau rotatif (7) est réalisé dans un matériau à faible coefficient de dilatation.

5. Dispositif selon l'une des revendications précédentes, **caractérisé par le fait que** le manteau rotatif (7) possède une circulation de fluide pour le contrôle de sa température.

6. Dispositif selon l'une des revendications précédentes, **caractérisé par le fait que** le manteau rotatif (7) est muni d'un revêtement de protection (9).

7. Dispositif selon la revendication 6, **caractérisé par le fait que** le revêtement de protection (9) est du polyuréthane.

## Patentansprüche

1. Drahtsägevorrichtung mit einem Rahmen (14), einer Drahtschicht (2), die befähigt ist, sich hin- und hergehend oder kontinuierlich zu bewegen, während sie gegen ein zu sägendes Werkstück (1) drückt, und von Drahtführungszylindern (4) gestützt wird, die ein ortsfestes Mittelstück (5) umfassen, das starr auf den Rahmen (14) montiert ist und einen rotierenden Mantel (7) trägt, der durch Lagerorgane (8, 8'), die zwischen dem ortsfesten Mittelstück (5) und dem rotierenden Mantel (7) angeordnet sind, drehbar auf das ortsfeste Mittelstück (5) montiert ist, **dadurch gekennzeichnet, dass** das ortsfeste Mittelstück aus einer zentralen Welle (5) besteht, die den rotierenden Mantel (7) ganz durchquert und beidseitig starr am Rahmen (14) gehalten wird.

2. Vorrichtung nach Anspruch 1, **dadurch gekennzeichnet, dass** die benannte zentrale Welle (5) als zwei Teilwellen (5') ausgeführt ist, die starr am Rahmen (14) befestigt sind und den rotierenden Mantel (7) von beiden Seiten stützen.

3. Vorrichtung nach Anspruch 1 oder 2, **dadurch gekennzeichnet, dass** die Lagerorgane (8) aus Kugellagern, Rollenlagern, Nadellagern und/oder hydraulischen oder pneumatischen Lagerungen bestehen.

4. Vorrichtung nach einem der Ansprüche 1 bis 3, **dadurch gekennzeichnet, dass** der rotierende Mantel (7) aus einem Werkstoff mit geringem Ausdehnungskoeffizienten gefertigt ist.

5. Vorrichtung nach einem der vorangehenden Ansprüche, **dadurch gekennzeichnet, dass** der rotierende Mantel (7) einen Fluidkreislauf zur Regelung seiner Temperatur hat.

6. Vorrichtung nach einem der vorangehenden Ansprüche, **dadurch gekennzeichnet, dass** der rotierende Mantel (7) mit einem Schutzüberzug (9) versehen ist.

7. Vorrichtung nach Anspruch 6, **dadurch gekennzeichnet, dass** der Schutzüberzug (9) aus Polyurethan besteht.

## Claims

1. Wire sawing device comprising a frame (14), a layer of wires (2) adapted to be displaced in alternating or continuous movement while bearing against a piece (1) to be sawed, and supported by wire guide cylinders (4) comprising a fixed central portion (5) mounted rigidly on the frame (14) and supporting a rotatable sleeve (7) which is mounted rotatably on the central fixed portion (5) by means of bearing members (8,8') arranged between the central fixed portion (5) and the rotatable sleeve (7), **characterised by** the fact that the central fixed portion is constituted by a central shaft (5) passing through from side to side of the rotatable sleeve (7) and maintained on both sides rigidly on the frame (14).

2. Device according to claim 1, **characterised by** the fact that said central shaft (5) is realised by two partial shafts (5') fixed rigidly for the frame (14) and supporting the rotatable sleeve (7) from each side.

3. Device according to claim 1 or 2, **characterised by** the fact that the bearing members (8) are constituted by ball bearing, roll bearings, needle bearings and/or bearings with a hydraulic or pneumatic film.

4. Device according to one of the claims 1 to 3, **characterised by** the fact that the rotatable sleeve (7) is constituted by a material with a low coefficient of expansion.

5. Device according to one of the preceding claims, **characterised by** the fact that the rotatable sleeve (7) has a circulation of fluids for the control of its temperature.

6. Device according to one of the preceding claims, **characterised by** the fact that the rotatable sleeve (7) is provided with a protective coating (9).

7. Device according to claim 6, **characterised by** the fact that the protective coating (9) is of polyurethane.
